# FASCICULE DE BREVET EUROPEEN

(11) **EP 2 275 669 B1**
(45) Date de publication et mention de la délivrance du brevet: **21.02.2018**
(21) Numéro de dépôt: 10165629.6
(22) Date de dépôt: 11.06.2010
(51) Int. Cl.: F03D 13/20

(54) **Procede, systeme et dispositif pour contribuer a l'assemblage d'une eolienne**
Verfahren, System und Vorrichtung zur Unterstützung des Zusammenbaus einer Windkraftanlage
Method, system and device for contributing to the assembly of a wind turbine

(30) Priorité: 15.06.2009 FR 0953990
(43) Date de publication de la demande: 19.01.2011
(73) Titulaire: SOLETANCHE FREYSSINET, 92500 Rueil Malmaison (FR)
(72) Inventeur: Lebon, Jean-Daniel, 78100 Saint Germain en Laye (FR); Ferrand de La Conté, Charles-Emmanuel, 78150 Le Chesnay (FR); Mellier, Erik, 78000 Versailles (FR)
(74) Mandataire: Cabinet Plasseraud

(56) Documents cités:
- WO-A-96/10130
- WO-A-03/100248
- DE-A1-102005 025 646
- US-A1- 2007 243 063

## Description

La présente invention concerne l'assemblage d'une éolienne comme par exemple connue de WO03/100248. Dans son état final d'assemblage, une éolienne comprend généralement un mât surmonté d'une nacelle coopérant avec un rotor recevant une pluralité de pales.

Pour aboutir à cet état final, des opérations d'assemblage entre les différents éléments constitutifs de l'éolienne sont effectuées.

Ces opérations sont généralement complexes et coûteuses.

C'est le cas en particulier pour ce qui concerne le montage des pales. Ceci s'explique notamment par le fait que les pales sont encombrantes et que leur point de fixation sur l'éolienne est haut.

Ce montage est classiquement réalisé en fixant d'abord tout ou partie des pales sur le rotor et en levant l'ensemble « rotor + pales » jusqu'au sommet du mât positionné verticalement. Les moyens de levage nécessaires à cet effet, par exemple des grues, sont lourds et complexes.

La situation est particulièrement délicate dans le cas d'une éolienne offshore, c'est-à-dire destinée à être située en pleine mer.

En effet, il est classique de transporter séparément les éléments constitutifs d'une telle éolienne puis de les assembler en mer.

A titre d'exemple courant, le rotor et le mât sont transportés séparément en mer sur un navire de transport. Les trois pales (ou deux seulement des trois pales pour limiter l'encombrement et permettre le stockage sur le navire de transport) sont déjà fixées sur le rotor lors du transport. Puis, une fois en mer, le rotor et les pales sont levés ensemble pour être placés au sommet du mât, à l'aide de grues montées sur des barges ou des plateformes fixes.

Ces travaux maritimes sont relativement longs, complexes et coûteux. Leur niveau de sécurité est parfois aussi inférieur à celui de travaux réalisés sur terre.

La présente invention vise à limiter certains au moins de ces inconvénients.

L'invention propose ainsi un procédé pour contribuer à l'assemblage d'une éolienne selon la revendication 1. Un tel procédé permet d'obtenir une éolienne, dans un état d'assemblage non final. Cet état peut faciliter l'éventuel assemblage ultérieur des pales sur le rotor. Il peut ainsi être utilisé comme un état intermédiaire d'assemblage de l'éolienne. Il peut aussi être utilisé pour transporter l'éolienne d'une façon simple et stable.

Selon des variantes avantageuses de l'invention qui peuvent être combinées entre elles de toutes les façons envisageables :
- l'association temporaire d'au moins certaines pales de ladite pluralité de pales avec le mât comprend la fixation temporaire desdites pales sur une structure de support solidaire du mât, et/ou
- lorsque la nacelle surmonte le mât, on effectue un déplacement relatif de certaines au moins des pales fixées temporairement sur la structure de support et de la nacelle de façon que lesdites pales soient positionnées à proximité du rotor, et/ou
- on déplace lesdites pales sensiblement autour d'un axe longitudinal du mât, et/ou
- on déplace lesdites pales le long d'un chemin ménagé dans la structure de support, et/ou
- on fait tourner la nacelle sensiblement autour d'un axe longitudinal du mât, et/ou
- des logements sont répartis angulairement autour du rotor pour recevoir des pales respectives de ladite pluralité de pales, et on fait tourner le rotor de façon à positionner lesdites pales successivement en regard des logements de rotor respectifs, et/ou
- lorsqu'une pale est sensiblement en regard du logement de rotor respectif, on fixe ladite pale dans ledit logement de rotor respectif, et/ou
- lorsqu'une première pale a été fixée dans le logement de rotor respectif, on fait tourner le rotor de façon à positionner une deuxième pale en regard du logement de rotor respectif, la rotation du rotor entraînant la libération de la première pale de la structure de support, et/ou
- l'association temporaire d'au moins certaines pales de ladite pluralité de pales avec le mât est suivie d'une fixation desdites pales sur le rotor, d'une libération desdites pales de la structure de support solidaire du mât, et d'une désolidarisation de ladite structure de support et du mât, et/ou
- l'association temporaire d'au moins certaines pales de ladite pluralité de pales avec le mât est réalisée en une position temporaire terrestre, et on fixe lesdites pales sur le rotor une fois une position définitive de l'éolienne atteinte, et/ou
- la position définitive de l'éolienne se situe en milieu aquatique, et on transporte en milieu aquatique un ensemble comprenant le mât et les pales associées temporairement avec le mât, en associant au moins un flotteur audit ensemble, de façon à assurer une flottaison stable dudit ensemble dans le milieu aquatique, le flotteur entourant ledit ensemble et une portion inférieure dudit ensemble s'étendant au-dessous dudit flotteur, et en faisant progresser ledit ensemble et le flotteur associé dans le milieu aquatique jusqu'à la position définitive de l'éolienne.

L'invention propose aussi un système pour contribuer à l'assemblage d'une éolienne destinée à comprendre, dans un état final d'assemblage, un mât surmonté d'une nacelle coopérant avec un rotor recevant une pluralité de pales, le système étant agencé pour mettre en oeuvre le procédé selon l'une quelconque des revendications précédentes. Le système comprend des moyens agencés pour associer temporairement au moins certaines pales de ladite pluralité de pales avec le mât, de façon que lesdites pales s'étendent sensiblement dans le sens longitudinal du mât.

L'invention propose en outre une structure de support pour contribuer à l'assemblage d'une éolienne destinée à comprendre, dans un état final d'assemblage, un mât surmonté d'une nacelle coopérant avec un rotor recevant une pluralité de pales. La structure de support est agencée pour être solidarisée avec le mât et pour recevoir temporairement certaines au moins des pales de ladite pluralité de pales, de façon que lesdites pales s'étendent sensiblement dans le sens longitudinal du mât.

L'invention propose encore une éolienne, dans un état intermédiaire d'assemblage, comprenant certaines pales au moins d'une pluralité de pales et un mât associés temporairement de façon que lesdites pales s'étendent sensiblement dans le sens longitudinal du mât.

D'autres particularités et avantages de la présente invention apparaîtront dans la description ci-après d'exemples de réalisation non limitatifs, en référence aux dessins annexés, dans lesquels :
- les figures 1 à 7 sont des schémas montrant un exemple non-limitatif d'étapes successives pour la fixation de pales à un rotor, les pales étant initialement associées temporairement avec un mât, et
- les figures 8 à 11 sont des schémas montrant un exemple non-limitatif de transport en mer d'une éolienne dans un état non final d'assemblage.

Comme rappelé en introduction, une éolienne, dans son état final d'assemblage, comprend classiquement un mât 2 surmonté d'une nacelle 4 coopérant avec un rotor 5 recevant une pluralité de pales 3a-3c (deux, trois ou plus).

La présente invention propose de contribuer à l'assemblage d'une éolienne, en associant temporairement au moins certaines des pales au mât, de façon que ces pales s'étendent sensiblement dans le sens longitudinal du mât. Autrement dit, on relie temporairement tout ou partie des pales au mât de façon à ce qu'elles s'étendent dans la même direction que le mât. L'association est dite temporaire dans la mesure où les pales ne sont pas destinées à rester dans cette position longitudinale, mais à être fixées au rotor de l'éolienne dans son état final d'assemblage.

L'association des pales et du mât peut prendre des formes diverses. Par exemple, les pales peuvent être fixées directement sur le mât, en un ou plusieurs points de ce dernier. En variante, les pales peuvent ne pas être en contact avec le mât, mais avec une structure qui leur assure un positionnement dans le sens longitudinal du mât.

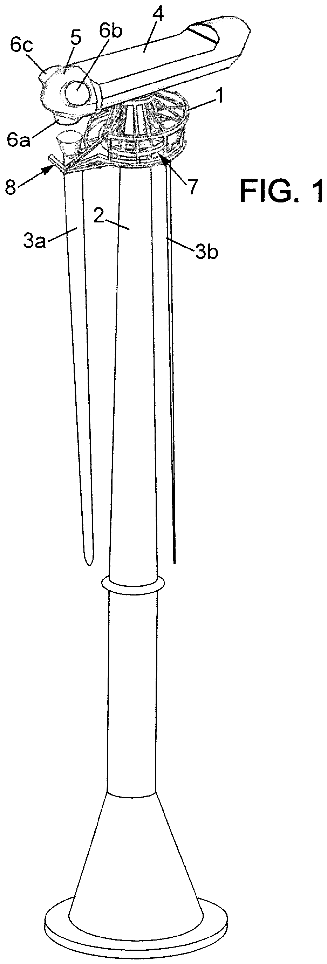

La figure 1 montre un exemple avantageux d'association temporaire de pales avec le mât, de façon que les pâles s'étendent sensiblement le long du mât. Cet exemple d'association temporaire comprend la fixation temporaire des pales 3a-3c sur une structure de support 1 solidaire du mât 2.

La structure de support 1 est fixée au mât 2 en son centre et possède une forme sensiblement circulaire, bien que d'autres formes soient également possibles. A titre d'exemple, la structure de support pourrait être annulaire autour du mât 2, mais de forme non circulaire, par exemple elliptique. Dans le cas d'une structure annulaire autour du mât (circulaire ou non), la forme de la structure peut éventuellement être centrée autour d'un axe longitudinal du mât 2, bien que cela ne soit pas obligatoire. Selon un autre exemple, la structure de support pourrait être sensiblement rectiligne, les pales étant alignées sur cette structure.

La fixation de la structure de support 1 au mât 2 peut éventuellement être temporaire, c'est-à-dire que la structure de support 1 peut être séparée du mât 2, par exemple une fois achevé l'assemblage des pales sur le rotor.

Dans l'exemple illustré, les pales 3a-3c sont fixées à la structure de support 1 par leur extrémité destinée à être reçue par le rotor 5, par exemple dans des logements 6a-6c respectifs du rotor répartis angulairement. Cette extrémité, plus épaisse que la partie courante d'une pale, est par exemple retenue par un double anneau de la structure de support 1. Ce double anneau forme un chemin 7, sensiblement circulaire dans ce cas, sur lequel l'extrémité de chaque pale repose et peut éventuellement se déplacer.

L'entrée et la sortie des pales dans la structure de support 1 peuvent se faire par l'intermédiaire d'une ouverture 8 ménagée dans la structure de support 1, sur laquelle le chemin 7 débouche. La fixation des pales 3a-3c à la structure de support 1 est donc bien temporaire, puisque ces éléments peuvent être séparés, par exemple en vue, dans le cadre ou en conséquence de l'éventuel assemblage ultérieur des pales sur le rotor.

D'autres formes de structures de support que celle représentée à la figure 1 sont envisageables, comme cela apparaîtra à l'homme du métier.

Avantageusement, la structure de support 1 solidaire du mât 2 est positionnée à proximité de l'extrémité supérieure du mât 2. Si la nacelle 4 coopérant avec le rotor 5 surmonte le mât 2 (selon les besoins, la nacelle 4 peut être placée au sommet du mât 2 antérieurement ou postérieurement à l'association temporaire des pales avec le mât 2), la structure de support 1 peut même être placée en contact ou quasi en contact avec la base de cette nacelle 4, comme cela apparaît sur la figure 1.

On va décrire ci-après des opérations optionnelles pouvant être mises en oeuvre par exemple en vue de l'assemblage des pales 3a-3c sur le rotor 5.

On suppose désormais que la nacelle 4 coopérant avec le rotor 5 surmonte le mât 2, qui est par exemple en position verticale. On effectue alors un déplacement relatif de certaines au moins des pales 3a-3c fixées temporairement sur la structure de support 1 et de la nacelle 4 de façon que lesdites pales soient positionnées 3a-3c à proximité du rotor 5.

Dans l'exemple de la figure 1, la pale 3a repose au niveau de l'ouverture 8 de la structure de support 1. Elle est déjà à proximité du rotor 5, plus précisément en regard du logement 6a du rotor destiné à la recevoir.

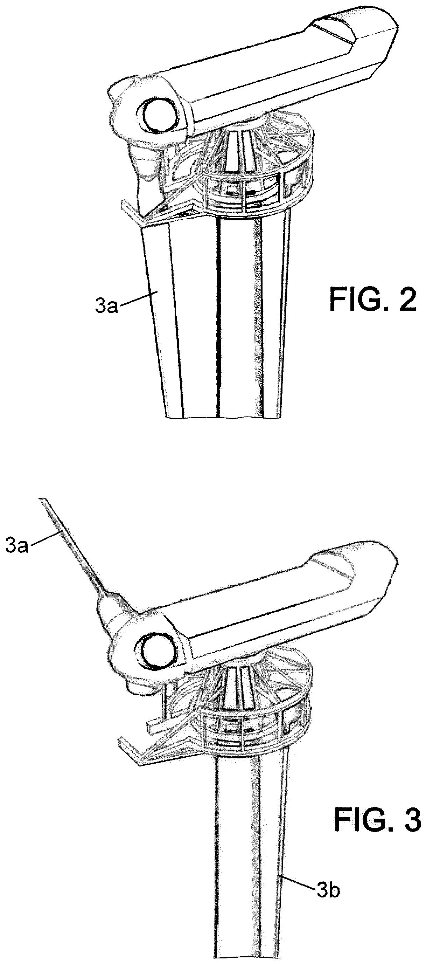

La fixation de la pale 3a dans le rotor 5, par introduction de l'extrémité de cette pale dans le logement 6a correspondant, comme illustré sur la figure 2, est alors aisée du fait de la proximité entre ces éléments. Le mode de fixation peut prendre toute forme envisageable (maintien par complémentarité de forme entre le logement et l'extrémité de la pale, ancrage de la pale dans le logement, etc.) Un levage léger de la pale 3a, par exemple à l'aide d'un vérin, peut suffire à réaliser l'introduction.

En ce qui concerne les autres pales 3b-3c fixées temporairement sur la structure de support 1, elles peuvent par exemple être déplacées sensiblement autour d'un axe longitudinal du mât 2. Ceci peut être réalisé par déplacement de ces pales le long du chemin 7 ménagé dans la structure de support 1. Un tel déplacement peut également se faire à l'aide de moyens légers, tels que vérins ou autres.

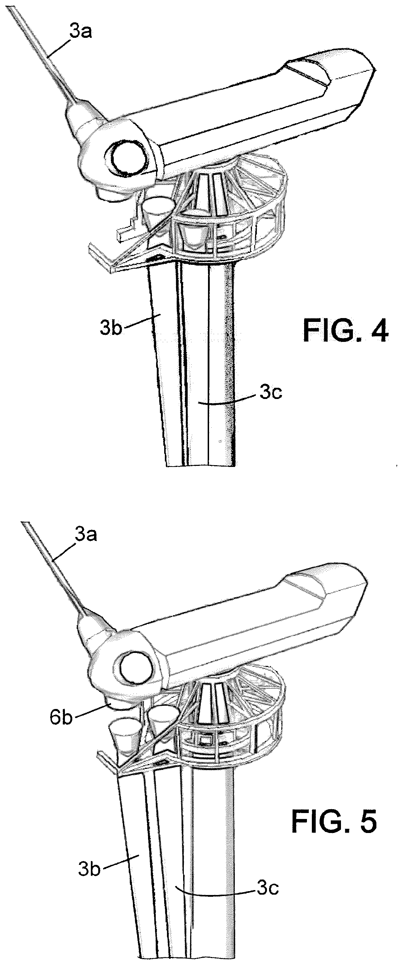

Ainsi, comme le montrent les figures 3 à 5, la pale 3b est déplacée le long du chemin 7 depuis son emplacement de stockage (figure 3) jusqu'à un emplacement situé à proximité du rotor 5 (figure 4).

Puis elle est amenée jusqu'à l'ouverture 8 de la structure de support 1 (figure 5). A cet endroit, elle fait face au logement 6b correspondant du rotor 5, ce dernier ayant préalablement ou concomitamment tourné à cet effet, entraînant ainsi un éloignement de la pale 3a déjà fixée au rotor et sa libération de la structure de support 1. La fixation de la pale 3b dans le logement 6b du rotor 5 peut alors être effectuée de façon simple, comme dans le cas de la pale 3a.

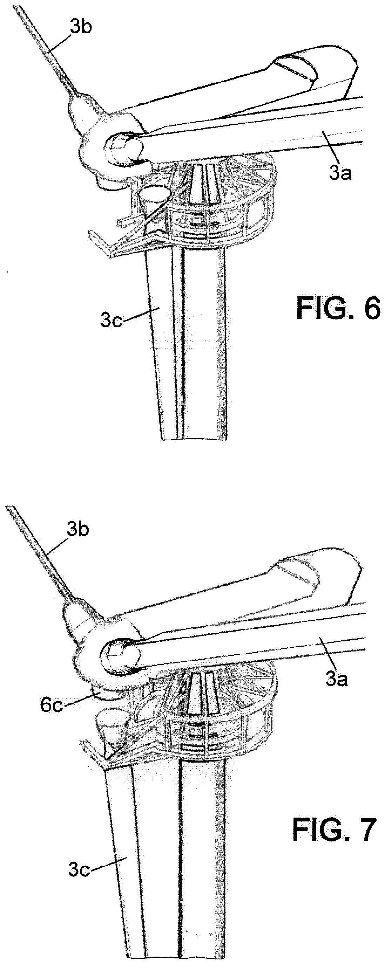

Ces dernières étapes peuvent alors être reproduites de façon similaire en ce qui concerne la pale 3c, comme illustré sur les figures 6 et 7.

D'autres modes de déplacement des pales 3a-3c autour d'un axe longitudinal du mât 2 peuvent être envisagées, comme cela apparaîtra à l'homme du métier.

A titre d'exemple, la structure de support 1 pourrait être montée mobile en rotation autour du mât 2, les pales 3a-3c restant éventuellement fixes au sein de cette structure de support 1. Dans ce cas, on pourrait faire tourner la structure de support 1 autour du mât 2, de façon à positionner successivement les pales 3a-3c à proximité du rotor 5, par exemple en regard des logements 6a-6c de rotor correspondants.

D'autres modes de déplacement relatif des pales 3a-3c et de la nacelle 4 sont aussi envisageables.

A titre d'exemple, la structure de support 1 pourrait rester fixe autour du mât 2, tandis que la nacelle 4 tournerait sensiblement autour d'un axe longitudinal du mât 2. De cette façon, on pourrait faire tourner la nacelle 4 de façon à placer le rotor 5 au-dessus de chacune des pales successivement, mettant ainsi avantageusement en correspondance une pale avec le logement de rotor correspondant.

Selon un autre exemple, lorsque la structure de support n'est pas circulaire mais rectiligne, les pales peuvent avantageusement être translatées dans la structure de support de façon à être amenées à proximité du rotor.

Dans l'exemple illustré sur les figures 1 à 7, la fixation des pales 3a-3c sur le rotor 5 s'accompagne, lors de la rotation subséquente du rotor 5, d'une libération de ces pales de la structure de support 1 solidaire du mât 2.

Une fois l'ensemble des pales 3a-3c montées sur le rotor 5, il est possible de désolidariser la structure de support 1 du mât 2. Ceci peut être réalisé de toute façon appropriée, en fonction de la forme de la structure de support 1 et de son mode de fixation sur le mât 2. A titre d'exemple, cette structure pourrait être descendue du haut du mât 2 à l'aide de treuils.

On comprend que les opérations décrites jusque là sont moins complexes et moins coûteuses que celles de l'art antérieur. En effet, l'assemblage temporaire des pales le long du mât peut être réalisé pale par pale. De plus, une fois les pales assemblées le long du mât, elles peuvent être approchées et fixées au rotor de façon simple, à l'aide de moyens légers tels que des vérins. Le recours aux grues utilisées dans l'art antérieur pour lever l'ensemble « rotor + pales » jusqu'au sommet du mât est évité avec la présente invention.

De plus, l'association temporaire d'au moins certaines pales avec le mât peut avantageusement être réalisée en une position temporaire terrestre, tandis que la fixation des pales sur le rotor peut être réalisée une fois une position définitive de l'éolienne atteinte. Ainsi, même lorsqu'on s'intéresse à une éolienne offshore, c'est-à-dire destinée à être située en pleine mer, l'association temporaire peut être effectuée sur terre plutôt qu'en mer. De cette façon, on réduit le recours à de la logistique maritime lourde, telle que des grues marines, des barges, des navires, etc. On renforce en outre la sécurité des travaux en les réalisant sur terre.

Dans l'hypothèse où la position définitive de l'éolienne se situe en milieu aquatique, par exemple en mer, on peut avantageusement transporter un ensemble comprenant le mât et les pales associées temporairement au mât, ainsi avantageusement que la nacelle et le rotor, selon les principes exposés dans FR 07 07881.

Le transport de cet ensemble peut ainsi se faire en associant au moins un flotteur audit ensemble, de façon à assurer une flottaison stable dudit ensemble dans le milieu aquatique, le flotteur entourant ledit ensemble et une portion inférieure dudit ensemble s'étendant au-dessous dudit flotteur, et en faisant progresser ledit ensemble et le flotteur associé dans le milieu aquatique jusqu'à position définitive de l'éolienne.

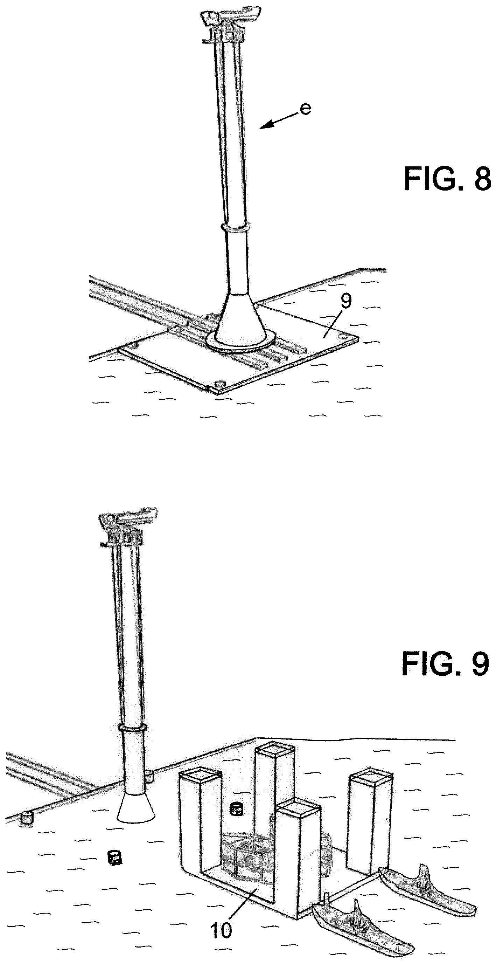

Les figures 8 à 11 illustrent un exemple non limitatif d'un tel transport.

Dans cet exemple, l'ensemble e comprenant le mât, les pales assemblées temporairement le long du mât, ainsi que la nacelle et le rotor, est tout d'abord transféré sur une barge 9 située en bordure d'un quai (figure 8).

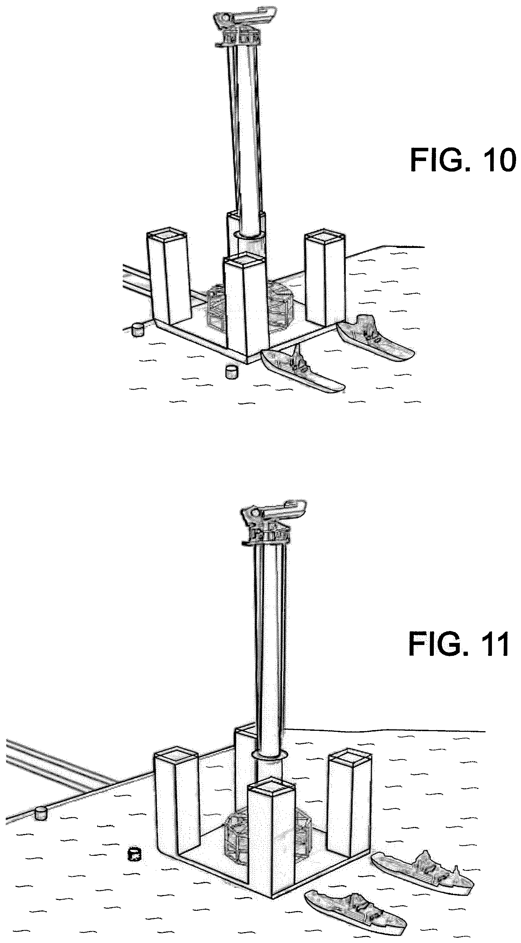

On fait alors descendre la barge 9 dans l'eau, entraînant ainsi l'entrée de la base du mât dans l'eau. Un flotteur 10 est amené pour être associé à l'ensemble e, de façon à lui assurer une flottaison stable (figures 9 et 10). A cet effet, il entoure cet ensemble e, par exemple au niveau de la base du mât, et une portion inférieure de cet ensemble e s'étend au-dessous du flotteur 10.

Par la suite, on fait progresser l'ensemble e et le flotteur associé 10 dans le milieu aquatique, par exemple en les tirant à l'aide de navires, jusqu'à la position définitive de l'éolienne (figure 11).

Comme indiqué plus haut, c'est en cette position définitive de l'éolienne que les pales peuvent avantageusement être fixées au rotor. Pour ce faire, seuls des moyens légers sont nécessaires. Les travaux maritimes complexes prévus pour la pose des pales dans l'art antérieur sont éliminés.

En outre, le transport de l'ensemble e avec les pales placées le long du mât réduit considérablement sa prise au vent en comparaison d'une éolienne qui serait transportée dans son état final d'assemblage. La stabilité de l'ensemble est ainsi renforcée au cours de son transport dans l'eau.

## Revendications

1. Procédé pour contribuer à l'assemblage d'une éolienne destinée à comprendre, dans un état final d'assemblage, un mât (2) surmonté d'une nacelle (4) coopérant avec un rotor (5) recevant une pluralité de pales (3a-3c), le procédé comprenant une association temporaire d'au moins certaines pales de ladite pluralité de pales avec le mât, de sorte que lesdites pales soient portées temporairement par une structure de support (1) placée solidairement autour du mât et s'étendent sensiblement dans le sens longitudinal du mât, et dans lequel, lorsque la nacelle surmonte le mât, on effectue un déplacement relatif, sensiblement autour d'un axe longitudinal du mât, de la nacelle et d'une au moins des pales portées par la structure de support de façon que ladite pale soit positionnée à proximité du rotor.

2. Procédé selon la revendication 1, dans lequel lesdites pales sont portées temporairement par la structure de support (1) par leur extrémité destinée à être reçue par le rotor (5).

3. Procédé selon la revendication 1 ou 2, dans lequel on déplace lesdites pales (3a-3c) le long d'un chemin (7) ménagé dans la structure de support.

4. Procédé selon l'une quelconque des revendications précédentes, dans lequel on fait tourner la nacelle (4) sensiblement autour d'un axe longitudinal du mât (2).

5. Procédé selon l'une quelconque des revendications précédentes, dans lequel des logements (6a-6c) sont répartis angulairement autour du rotor (5) pour recevoir des pales (3a-3c) respectives de ladite pluralité de pales, et dans lequel on fait tourner le rotor de façon à positionner lesdites pales successivement en regard des logements de rotor respectifs.

6. Procédé selon la revendication 5, dans lequel, lorsqu'une pale (3a-3c) est sensiblement en regard du logement (6a-6c) de rotor (5) respectif, on fixe ladite pale dans ledit logement de rotor respectif.

7. Procédé selon la revendication 6, dans lequel ladite pale est approchée dudit logement de rotor respectif à l'aide d'un moyen de levage léger tel qu'un vérin.

8. Procédé selon la revendication 6 ou 7, dans lequel, lorsqu'une première pale (3a) a été fixée dans le logement (6a) de rotor respectif, on fait tourner le rotor (5) de façon à positionner une deuxième pale (3b) en regard du logement (6b) de rotor respectif, la rotation du rotor entraînant la libération de la première pale de la structure de support (1).

9. Procédé selon l'une quelconque des revendications précédentes, dans lequel l'association temporaire d'au moins certaines pales (3a-3c) de ladite pluralité de pales avec le mât (2) est suivie d'une fixation desdites pales sur le rotor (5), d'une libération desdites pales de la structure de support (1) solidaire du mât, et d'une désolidarisation de ladite structure de support et du mât.

10. Procédé selon l'une quelconque des revendications précédentes, dans lequel l'association temporaire d'au moins certaines pales (3a-3c) de ladite pluralité de pales avec le mât est réalisée en une position temporaire terrestre, et dans lequel on fixe lesdites pales sur le rotor (5) une fois une position définitive de l'éolienne atteinte.

11. Procédé selon la revendication 10, dans lequel la position définitive de l'éolienne se situe en milieu aquatique, et dans lequel on transporte en milieu aquatique un ensemble (e) comprenant le mât (2) et les pales (3a-3c) associées temporairement avec le mât, en associant au moins un flotteur (10) audit ensemble, de façon à assurer une flottaison stable dudit ensemble dans le milieu aquatique, le flotteur entourant ledit ensemble et une portion inférieure dudit ensemble s'étendant au-dessous dudit flotteur, et en faisant progresser ledit ensemble et le flotteur associé dans le milieu aquatique jusqu'à la position définitive de l'éolienne.

12. Système pour contribuer à l'assemblage d'une éolienne destinée à comprendre, dans un état final d'assemblage, un mât (2) surmonté d'une nacelle (4) coopérant avec un rotor (5) recevant une pluralité de pales (3a-3c), le système étant agencé pour mettre en oeuvre le procédé selon l'une quelconque des revendications précédentes, le système comprenant des moyens agencés pour associer temporairement au moins certaines pales de ladite pluralité de pales avec le mât, de façon que lesdites pales soient portées temporairement par une structure de support (1) placée solidairement autour du mât et s'étendent sensiblement dans le sens longitudinal du mât, lesdits moyens étant en outre agencés pour permettre, lorsque la nacelle surmonte le mât, un déplacement relatif, sensiblement autour d'un axe longitudinal du mât, de la nacelle et d'une au moins des pales portées par la structure de support de façon que ladite pale soit positionnée à proximité du rotor.

13. Structure de support (1) pour contribuer à l'assemblage d'une éolienne destinée à comprendre, dans un état final d'assemblage, un mât (2) surmonté d'une nacelle (4) coopérant avec un rotor (5) recevant une pluralité de pales (3a-3c), la structure de support étant agencée pour être placée solidairement autour du mât et pour porter temporairement certaines au moins des pales de ladite pluralité de pales par leur extrémité destinée à être reçue par le rotor (5), de façon que lesdites pales s'étendent sensiblement dans le sens longitudinal du mât.

14. Structure de support (1) selon la revendication 13, dans laquelle est ménagé un chemin le long duquel lesdites pales (3a-3c) peuvent se déplacer.

## Patentansprüche

1. Verfahren zur Unterstützung des Zusammenbaus einer Windkraftanlage, die in einem Endzustand des Zusammenbaus einen Mast (2) mit einer oben sitzenden Gondel (4), die mit einem Rotor (5) zusammenwirkt, der mehrere Blätter (31-3c) empfängt, aufweisen soll, wobei das Verfahren eine temporäre Kopplung mindestens einiger Blätter der mehreren Blätter mit dem Mast aufweist, derart, dass die Blätter von einer um den Mast herum fest angeordneten Trägerstruktur (1) temporär getragen werden und sich im Wesentlichen in Längsrichtung des Masts erstrecken, und wobei, wenn die Gondel oben am Mast angebracht ist, eine relative Bewegung der Gondel und mindestens eines der von der Trägerstruktur getragenen Blätter im Wesentlichen um eine Längsachse des Masts durchgeführt wird, derart, dass das Blatt nahe an dem Rotor positioniert wird.

2. Verfahren nach Anspruch 1, wobei die Blätter an ihrem von dem Rotor (5) in Empfang zu nehmenden Ende temporär von der Trägerstruktur (1) getragen werden.

3. Verfahren nach Anspruch 1 oder 2, wobei die Blätter (3a-3c) entlang eines in der Trägerstruktur bereitgestellten Wegs (7) verschoben werden.

4. Verfahren nach einem der vorstehenden Ansprüche, wobei die Gondel (4) im Wesentlichen um eine Längsachse des Masts (2) gedreht wird.

5. Verfahren nach einem der vorstehenden Ansprüche, wobei zum Empfangen von jeweiligen Blättern (3a-3c) der mehreren Blätter Aufnahmen (6a-6c) angular um den Rotor herum verteilt sind und wobei der Rotor gedreht wird, um die Blätter nacheinander gegenüber den jeweiligen Aufnahmen des Rotors zu positionieren.

6. Verfahren nach Anspruch 5, wobei, wenn ein Blatt (3a-3c) im Wesentlichen gegenüber der jeweiligen Aufnahme (6a-6c) des Rotors (5) ist, das Blatt in der jeweiligen Aufnahme des Rotors befestigt wird.

7. Verfahren nach Anspruch 6, wobei das Blatt mit Hilfe einer leichten Hebevorrichtung wie beispielsweise einer Winde an die jeweilige Aufnahme des Rotors angenähert wird.

8. Verfahren nach Anspruch 6 oder 7, wobei, nachdem ein erstes Blatt (3a) in der jeweiligen Aufnahme (6a) des Rotors befestigt worden ist, der Rotor (5) gedreht wird, um ein zweites Blatt (3b) gegenüber der jeweiligen Aufnahme (6b) des Rotors zu positionieren, wobei die Drehung des Rotors die Befreiung des ersten Blatts von der Trägerstruktur (1) bewirkt.

9. Verfahren nach einem der vorstehenden Ansprüche, wobei auf die temporäre Kopplung mindestens einiger Blätter (3a-3c) der mehreren Blätter mit dem Mast (2) eine Befestigung der Blätter an dem Rotor (5), eine Befreiung der Blätter von der mit dem Mast verbundenen Trägerstruktur (1) und eine Trennung der Trägerstruktur und des Masts voneinander folgt.

10. Verfahren nach einem der vorstehenden Ansprüche, wobei die temporäre Kopplung mindestens einiger Blätter (3a-3c) der mehreren Blätter mit dem Mast an einem temporären terrestrischen Standort durchgeführt wird und wobei nach Erreichen des endgültigen Standorts der Windkraftanlage die Blätter an dem Rotor (5) befestigt werden.

11. Verfahren nach Anspruch 10, wobei der endgültige Standort der Windkraftanlage sich im aquatischen Milieu befindet und wobei eine Anordnung (e), die den Mast (2) und die temporär mit dem Mast gekoppelten Blätter (3a-3c) aufweist, in das aquatische Milieu transportiert wird, indem die Anordnung mit mindestens einem Schwimmkörper (10) gekoppelt wird, derart, um ein stabiles Schwimmen der Anordnung in dem aquatischen Milieu sicherzustellen, wobei der Schwimmkörper die Anordnung umgibt und ein unterer Abschnitt der Anordnung sich unterhalb des Schwimmkörpers erstreckt, und indem die mit dem Schwimmkörper versehene Anordnung in dem aquatischen Milieu zum Zielstandort der Windkraftanlage bewegt wird.

12. System zur Unterstützung des Zusammenbaus einer Windkraftanlage, die in einem Endzustand des Zusammenbaus einen Mast (2) mit einer oben sitzenden Gondel (4), die mit einem Rotor (5) zusammenwirkt, der mehrere Blätter (3a-3c) empfängt, aufweisen soll, wobei das System konfiguriert ist, das Verfahren nach einem der vorstehenden Ansprüche durchzuführen, wobei das System Einrichtungen aufweist, die konfiguriert sind, um mindestens einige Blätter der mehreren Blätter temporär mit dem Mast zu koppeln, derart, dass die Blätter temporär von einer um den Mast herum fest angeordneten Trägerstruktur (1) getragen werden und sich im Wesentlichen in Längsrichtung des Masts erstrecken, wobei die Einrichtungen ferner konfiguriert sind, um, wenn die Gondel oben auf dem Mast sitzt, eine relative Verschiebung der Gondel und mindestens eines der von der Trägerstruktur getragenen Blätter im Wesentlichen um eine Längsachse des Masts zu erlauben, so dass das Blatt nahe an dem Rotor positioniert wird.

13. Trägerstruktur (1) zur Unterstützung des Zusammenbaus einer Windkraftanlage, die in einem Endzustand des Zusammenbaus einen Mast (2) mit einer oben sitzenden Gondel (4), die mit einem Rotor (5) zusammenwirkt, der mehrere Blätter (3a-3c) empfängt, aufweisen soll, wobei die Trägerstruktur konfiguriert ist, fest um den Mast herum angeordnet zu werden und temporär mindestens einige Blätter der mehreren Blätter an ihrem von dem Rotor (5) in Empfang zu nehmenden Ende zu tragen, derart, dass sich die Blätter im Wesentlichen in Längsrichtung des Masts erstrecken.

14. Trägerstruktur (1) nach Anspruch 13, in welcher ein Weg bereitgestellt ist, entlang dessen die Blätter (3a-3c) verschiebbar sind.

## Claims

1. A method for contributing to the assembly of a wind turbine-comprising, in a final assembly condition, a tower (2) surmounted by a nacelle (4) cooperating with a rotor (5) receiving a plurality of blades (3a-3c), the method comprising a temporary association with the tower of at least some blades from said plurality of blades, such that said blades are fixed temporarily onto a support structure (1) placed securely around the tower and extending substantially in the longitudinal direction of the tower, and in which, when the nacelle surmounts the tower, a relative movement of the nacelle and at least one of the blades fixed onto the support structure is carried out, substantially about a longitudinal axis of the tower, so that said blade is positioned close to the rotor.

2. The method according to claim 1, wherein said blades are fixed temporarily onto the support structure (1) by their end intended to be received by the rotor.

3. The method according to claim 1 or 2, wherein said blades (3a-3c) are moved along a track (7) arranged in the support structure.

4. The method according to any of the preceding claims, wherein the nacelle (4) is rotated substantially about a longitudinal axis of the tower (2).

5. The method according to any of the preceding claims, wherein housings (6a-6c) are distributed angularly around the rotor (5) in order to receive the respective blades (3a-3c) from said plurality of blades, and wherein the rotor is rotated so as to position said blades successively opposite the respective rotor housings.

6. The method according to claim 5, wherein, when a blade (3a-3c) is substantially opposite the respective rotor housing (6a-6c), said blade is fixed into said respective rotor housing.

7. The method according to claim 6, wherein said blade is moved towards said respective rotor housing using a light lifting means like an actuator.

8. The method according to claim 6 or 7, wherein, when a first blade (3a) has been fixed into the respective rotor housing (6a), the rotor (5) is rotated so as to position a second blade (3b) opposite the respective rotor housing (6b), the rotation of the rotor leading to the release of the first blade of the support structure (1).

9. The method according to any of the preceding claims, wherein the temporary association with the tower (2) of at least some blades (3a-3c) from said plurality of blades is followed by fixing said blades onto the rotor (5), releasing said blades from the support structure (1) securely attached to the tower, and detaching said support structure from the tower.

10. The method according to any of the preceding claims, wherein the temporary association with the tower of at least some blades (3a-3c) from said plurality of blades is carried out in a temporary position on land, and wherein said blades are fixed onto the rotor (5) once a final position of the wind turbine has been reached.

11. The method according to claim 10, wherein the final position of the wind turbine is located in a marine environment, and wherein an assembly (e) comprising the tower (2) and the blades (3a-3c) temporarily associated with the tower is transported to the marine environment by associating at least one float (10) with said assembly, so as to provide a stable buoyancy of said assembly in the marine environment, the float surrounding said assembly and a lower portion of said assembly extending below said float, and by causing said assembly and the associated float to travel in the marine environment to the final position of the wind turbine.

12. A system for contributing to the assembly of a wind turbine comprising, in a final assembly condition, a tower (2) surmounted by a nacelle (4) cooperating with a rotor (5) receiving a plurality of blades (3a-3c), the system being arranged to execute the method according to one of the preceding claims, the system comprising means arranged for temporarily associating with the tower at least some blades from said plurality of blades, so that said blades are fixed temporarily onto a support structure (1) placed securely around the tower and extending substantially in the longitudinal direction of the tower, said means being further arranged for allowing, when the nacelle surmounts the tower, a relative movement of the nacelle and at least one of the blades fixed onto the support structure, substantially about a longitudinal axis of the tower, so that said blade is positioned close to the rotor.

13. A support structure (1) for contributing to the assembly of a wind turbine comprising, in a final assembly condition, a tower (2) surmounted by a nacelle (4) cooperating with a rotor (5) receiving a plurality of blades (3a-3c), the support structure being arranged for being placed securely around the tower and for fixing temporarily at least some of the blades from said plurality of blades onto their end intended to be received by the rotor (5), so that said blades extend substantially in the longitudinal direction of the tower.

14. The support structure (1) according to claim 13, in which a track is provided along which said blades (3a-3c) can move.
